(19) Europäisches Patentamt
European Patent Office
Office européen des brevets

(11) **EP 2 375 746 A1**

(12) **EUROPEAN PATENT APPLICATION**

(43) Date of publication:
**12.10.2011 Bulletin 2011/41**

(51) Int Cl.:
*H04N 7/26* (2006.01)　　　*H04N 13/00* (2006.01)

(21) Application number: **10158617.0**

(22) Date of filing: **31.03.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA ME RS**<br><br>(71) Applicants:<br>• **Deutsche Telekom AG**<br>**53113 Bonn (DE)** | • **Technische Universität Berlin**<br>**10623 Berlin (DE)**<br><br>(72) Inventor: **Velisavljevic, Vladan**<br>**10625 Berlin (DE)**<br><br>(74) Representative: **Heunemann, Dieter**<br>**Vossius & Partner**<br>**Siebertstrasse 4**<br>**81675 München (DE)** |

(54) **Method for encoding texture data of free viewpoint television signals, corresponding method for decoding and texture encoder and decoder**

(57)　　Method for encoding texture parts of free viewpoint television signals where the free viewpoint television signals are acquired using a sparse set of synchronized cameras capturing a scene from different spatial locations and where the signals of each camera for a specified time instant are pre-processed by implementing a background subtraction, thereby obtaining a set of subtracted signal frames (14), wherein the subtracted signal frame (14) of each single camera for a specified time is being encoded independently from the subtracted signal frames (14) of the other cameras by the use of a temporal and a spatial integer wavelet transform.

Fig. 2

**Description**

**Technical field**

The present application relates to the field of free viewpoint television (FVTV). More particularly, it relates to the field of methods for encoding and/or decoding texture data of free viewpoint television signals wherein the free viewpoint television signals are acquired using a sparse set of synchronized cameras capturing a scene from different spatial locations and wherein the signals of each camera for specific points of time are pre-processed by implementing a background subtraction, thereby obtaining a set of subtracted signal frames of the texture data. Apart from that, the invention relates to a corresponding encoder and/or decoder.

**Background of the invention and description of related art**

The concept of free viewpoint television (FVTV) focuses on sets of synchronized cameras that capture the same (natural) scene from different spatial locations, so-called viewpoints. The FVTV signal is represented as a set of video signals captured at each camera. The goal of FVTV is to allow for a reconstruction of the scene view from an arbitrarily chosen viewpoint. The viewer or user may interactively control the viewpoint. The arbitrarily chosen viewpoint can be either one of the camera viewpoints or a virtual viewpoint that does not coincide with any camera. The concept of FVTV includes a possible motion of the chosen viewpoint. A description of the concept of FVTV can be found in Tanimoto and Fujii, "FTV: Achievements and challenges", ISO/IEC JTC1/SC29/WG11 M11259, October 2004, and in Tanimoto and Wildeboer, "Frameworks for FTV coding", Picture Coding Symposium, PCS-2009, Chicago, IL, USA, May 2009.

However, the amount of data collected by the set of cameras is enormous. Therefore, one of the main challenges in the FVTV technique is how to encode, transmit or store the huge amount of data required for a photorealistic synthesis of the video signal at the chosen viewpoints. Possible approaches are discussed in Merkle, Smolic, Mueller and Wiegand, "Efficient prediction structures for multiview video coding", IEEE Transactions on Circuits and Systems for Video Technology, vol. 17, no. 11, pp. 1461-1473, November 2007, for example. The FVTV signal is commonly represented as a sampled version of the light-field (or as the so-called plenoptic function, which is equivalent to a complete holographic representation of the visual world).

The plenoptic function is, in general, a seven-dimensional function that includes the three-dimensional coordinates of the viewpoint, a two-dimensional focal projection of the scene, and a time and color (or light wavelength) dimension For a discussion see Adelson and Bergen, "The plenoptic function and the elements of early vision", Computational Models of Visual Processing, Eds. Landy and Movshon, pp. 3-20, MIT Press, Cambridge, MA, USA, 1991. A general coding method has to exploit the large correlation across these dimensions that exist in a common plenoptic function. However, a general solution is too complex for the current processing and transmission systems. For that reason, the practical coding methods rely on different simplifications, as will be explained in the following.

For example, in the case of FVTV coding based on silhouette representation, the underlying three-dimensional geometry of the scene is captured and encoded together with the texture data as explained in Mueller, Smolic, Kautzner, Eisert and Wiegand, "Rate-distortion optimized predictive compression of dynamic 3-D mesh sequences", Signal Processing: Image Communication, vol. 21, no. 9, pp. 812-828, 2007. At the decoder, the transmitted silhouette sequence is reconstructed to the corresponding three-dimensional shape, and the decoded textures are joint to the silhouette surface.

There is also the possibility to transform the silhouette sequences by wavelet transforms as well in the temporal as in the spatial dimension, which allows for an efficient and sparse representation of the data with a good spatial and temporal localization of the important features. Details can be found in Cho, Kim, Valette, Jung and Prost, "A 3-D mesh sequence coding using the combination of spatial and temporal wavelet analysis", Lecture Notes in Computer Science, vol. 4418, pp. 389-399, Springer, Berlin/Heidelberg, Germany, 2007.

Problems of coding of FVTV signals have been addressed in several patent documents, too. In JP-A-2007 052 644, WO 2009/108028 and also in WO 2009/131287, the coding is based on computing and transmitting depth maps associated to texture maps. In CN-A-000101557519, a parallax is estimated and compensated for decorrelation of the signals from different cameras. Then, in US-A-2009/0033740, the camera locations are constrained geometrically, whereas in US-A-2010/0026788 only the viewpoint above the scene is selected. The method in JP-A-2007141228 deals with only two video streams, whereas the method in CN-A-000101491079 is not based on wavelet transforms. Finally, according to CN-A-000101558652 the images can be decoded only partially. This leads to the consequence that no full random access is achieved.

In view of this prior art, it is an object of the present invention to suggest an improved coding and encoding method as well as an encoder and decoder for texture data of free viewpoint television signals for the case of a sparse camera setup acquiring the free viewpoint television signals.

## Summary of the invention

In order to meet this object, the present invention provides a method for encoding texture data of free viewpoint television signals wherein the free viewpoint television signals are acquired using a sparse set of synchronized cameras capturing a scene from different spatial locations and wherein the signals of each camera for specific points of time are pre-processed by implementing a background subtraction, thereby obtaining a set of subtracted signal frames of the texture data. The subtracted signal frames of each single camera for specific points of time are encoded independently from the subtracted signal frames of the other cameras, particularly for these specific points of time, by the use of a temporal and a spatial integer wavelet transform.

Furthermore, the invention provides a method for encoding texture data as described characterized by one step of the temporal integer wavelet transform generating a low-pass and a high-pass subband and/or being implemented for spatial coordinates having offset or not having offset in the temporal dimension.

The temporal integer wavelet transform can be implemented as an iterative multi-scale decomposition with the iteration being applied to the low-pass subband and/or a filtering of the temporal integer wavelet transform can be approximated using integer filter coefficients. Apart from that, an inventive method for encoding can be characterized by the spatial integer wavelet transform being implemented as an iterative multi-scale decomposition of each temporal wavelet transform subband and consisting of a separable horizontal and vertical step and/or a filtering of the spatial integer wavelet transform being approximated using integer filter coefficients.

Furthermore, in the context of the method for encoding according to the invention, the subtracted signal frames can undergo a color space conversion before the temporal and spatial integer wavelet transforms are applied, particularly a color space conversion to a luminance chrominance color space.

Apart from that, the invention provides a method for encoding texture data as above characterized by the subtracted signal frames undergoing a contouring before the temporal and spatial integer wavelet transforms are applied, particularly a contouring where they are analyzed to curve out zero areas obtained in the pre-processing process of background subtraction. The contouring can be implemented by computing the minimal rectangular box containing all non-zero pixels and/or by computing the precise curve of the outer border of the non-zero area. According to the invention, the spatial integer wavelet transform can be applied only to contoured foreground areas and/or can be implemented using a shape-adaptive modification.

The inventive method for encoding texture data can be characterized by the wavelet transformed signal frames undergoing a bit plane truncation and quantization in order to quantize the transform coefficients and/or the wavelet transformed signal frames undergoing an entropy coding. The truncation can be controlled by a quality factor and/or the truncation can be implemented so that retained bit planes carry the highest significance and/or the quantized coefficients can undergo an entropy coding. The compression efficiency can be traded off for the compression quality and/or computational complexity depending on the available processing power and/or the data size and/or using a single quality factor.

Apart from that, a method for encoding texture data is provided according to which an output signal is generated that is a bit stream consisting of an overall header, particularly containing the binary code of the number of cameras and/or the temporal resolution and/or the spatial resolution and/or the type of filters and number of iterations for the temporal and/or spatial integer wavelet transform, and of a header and/or data for each group of frames transformed jointly in one implementation of the temporal wavelet transform, particularly a header for each group of frames containing contouring data and/or motion compensation data and/or entropy coder header data. Furthermore, the inventive method for encoding can be characterized by the method providing random access to any group of frames transformed jointly in one implementation of the temporal wavelet transform at all viewpoints and/or providing a real-time implementation.

A further object of the invention is to provide a method for decoding texture data of free viewpoint television signals encoded as descibed characterized by the steps of encoding being applied in an inverse order and by the inverse spatial integer transform and the inverse temporal wavelet transform using approximated quantized values of the transform coefficients.

Yet another object of the invention is to provide a texture encoder, adapted to encode texture data of free viewpoint television signals, particularly by a method for encoding as described, and adapted to use as input free viewpoint television signals acquired by a sparse set of synchronized cameras capturing a scene from different spatial locations with the signals of each camera for specific points of time being pre-processed by implementing a background subtraction, thereby obtaining a set of subtracted signal frames. The texture encoder is characterized by being adapted to encode the subtracted signal frames of each single camera for specific points of time independently from the subtracted signal frames of the other cameras, particularly for these specific points of time, by the use of temporal and spatial integer wavelet transform means.

The texture encoder can further comprise a color space converter and/or contouring means and/or bit plane truncation and quantization means and/or an entropy coder.

Finally, the invention provides a texture decoder, adapted to, particularly by a method for decoding texture data as described, decode encoded texture data of free viewpoint television signals encoded by a texture encoder as mentioned or by a method as described, characterized by the texture decoder being adapted to apply the steps of encoding in an inverse order and the texture decoder comprising inverse spatial integer transform and inverse temporal integer wavelet transform means adapted to use approximated quantized values of the transform coefficients.

## Brief description of the drawings

| Fig. 1 | shows a block scheme of a signal pre-processing including background subtraction, silhouette modeling and encoding and required by the method for encoding texture data according to the invention, |
|---|---|
| Fig. 2 | depicts a sequence of operation diagram for an inventive method for encoding texture data, |
| Figs. 3a and 3b | show possible contouring steps in the framework of the present invention using a minimal rectangular box and a precise contour method, respectively, |
| Figs. 4a and 4b | show overviews of a temporal 1D and a spatial 2D wavelet transform according to the invention, respectively, |
| Figs. 5a and 5b | illustrate coordinates for different points of time in an inventive temporal |
| Fig. 6 | wavelet transform without and with motion compensation, and visualizes an example for the order and truncation of bit planes according to the invention. |

## Detailed description of the invention

First of all, the object of the invention as described above is accomplished by a method for encoding texture data of free viewpoint television signals wherein the free viewpoint television signals are acquired using a sparse set of synchronized cameras capturing a scene from different spatial locations and wherein the signals of each camera for specific points of time are pre-processed by implementing a background subtraction, thereby obtaining a set of subtracted signal frames of the texture data. The method is characterized by the subtracted signal frames of each single camera for specific points of time being encoded independently from the subtracted signal frames of the other cameras, particularly for these specific points of time, by the use of a temporal and a spatial integer wavelet transform.

Thus, the invention relates to the design of a wavelet-based coding method for textures (texture data or texture parts) of a scene captured by a sparse set of cameras with the cameras being placed at different locations. The textures themselves are obtained after a pre-processing step of background subtraction. The coding method used according to the invention is computationally simple so that it allows for a real-time implementation. The simplicity of the computation for a good part arises from omitting the normally-used standard prediction encoding schemes across the data taken from different viewpoints. Apart from that the implementations of the temporal wavelet transform and the spatial wavelet transform are based on integer coefficients. Integer coefficients result in reduced processing requirements when compared to floating point operations, for example.

As already pointed out, in the present invention only the FVTV texture encoding and decoding for a sparse camera setup are addressed. The technical term "sparse setup" denotes an arrangement where there is a comparatively small number of cameras for acquiring the FVTV signals. In such a sparse system, the correlation of the textures and/or the texture data provided by different cameras gathering data from different viewpoints usually is low. Therefore, applying a predicting scheme over the data acquired by different cameras would result in a considerable rise of the computational effort facing a comparatively low benefit.

The invention is based on a silhouette extraction taking part. However, the analysis of the silhouette representation itself is not the operative point of the invention. The silhouette representation is assumed to be extracted and transmitted in parallel with the texture data without this being an explicit part of the invention.

Moreover, the texture parts or data of the FVTV signals or, shortly, the textures from each camera are assumed to be pre-processed in a background subtraction step, where large areas of the frames that belong to the background are zeroed out. Because of the assumed sparse camera setup, the correlation of the textures from different cameras is expected to be low. Most of the correlation is actually exploited and removed in the silhouette extraction step. For this reason, no prediction coding scheme is applied across the video signals captured at different cameras.

Instead, according to the invention, each video signal from a single camera is encoded independently (from the signals of the other cameras of the set) using temporal and spatial integer wavelet transforms. So, the pre-processed subtracted signal frames of one camera at certain time instants are encoded separately without assuming any kind of relation to the other frames derived from the data of the remaining cameras. Advantageously, this inventive simplification reduces significantly the computational complexity and allows for real-time processing even using only moderate processors. This is especially an advantage at the more critical decoder side. Furthermore, independent encoding of each video signal alleviates random access to the chosen frames within the FVTV signal. A random access is important in a case when the selected viewpoint is arbitrarily moving throughout the scene.

It is to be noted that the inventive method refers to the encoding of physical measurement data or so to speak natural (not virtual) data, as the free viewpoint television signals are real (not virtual) television signals obtained from a real-life scene. Therefore, the described method for encoding textures is not in any way a mathematical method, but refers to the processing of image data in order to enable an optimal storing and viewing of the processed real data.

The signals captured by a number of cameras $1,...,N$ are first pre-processed in a background subtraction step. Then, such a set of N subtracted signals or subtracted signal frames is provided as the input to the wavelet-based method for texture encoding of the invention.

The required input signal in the inventive texture encoding method is a set of FVTV frames that are supposedly, as has been described before, pre-processed in a background subtraction step. Each frame is uniquely identified by 2 coordinates, the camera index c and the time instant or specific point of time $t$. Since each frame is a two-dimensional (2D) set of pixels, each pixel is, thereof, uniquely identified by a four-dimensional (4D) index vector $(c,t,x,y)$, where $x$ and $y$ are the spatial coordinates of the pixel within the frame.

According to the invention, the one step of the temporal integer wavelet transform preferably generates a low-pass and a high-pass subband and/or is implemented for spatial coordinates having offset or, otherwise, not having offset in the temporal dimension.

A one-dimensional (1D) wavelet transform with integer coefficients can be applied across the FVTV frames in the temporal dimension. A preferred way of applying the wavelet transform is to apply it within contoured foreground areas. One step of the transform generates two subbands, namely one low-pass (L) and one high-pass (H) subband. The transform is denoted as temporal wavelet transform (TWT). The inventive implementation can have two possible modalities. According to the first modality, the coordinates in the temporal dimension do not have any offset, that is, the TWT is applied across the pixel coordinates $(c, t, x, y)$, $(c, t+1, x, y)$, $(c, t+2, x, y)$, etc., depending on the length of filters used in the transform. According to the second modality, the coordinates in the temporal dimension have offset which is computed from any motion compensation method or the like. The TWT then is applied across the pixel coordinates $(c, t, x, y)$, $(c, t+1, x+\Delta x_1, y+\Delta y_1)$, $(c, t+2, x+\Delta x_2, y+\Delta y_2)$, etc, that is across coordinates with an offset or change $\Delta x_i$ or $\Delta y_i$ associated with them.

The temporal integer wavelet transform (TWT) can be implemented as an iterative multi-scale decomposition with the iteration being applied to the low-pass subband and/or a filtering of the temporal integer wavelet transform being approximated using integer filter coefficients.

Advantageously, the TWT is implemented as an iterative multi-scale decomposition, where the iteration is applied to the low-pass subband. The number of iterations (scales) $J_T$ can be arbitrarily chosen and such a choice results in $J_T$ high-pass subbands and 1 low-pass subband. The low-pass subband is indexed as $j_T=0$, whereas the high-pass subband obtained in the $k_1$th iteration is indexed as $j_T=J_T-k_1+1$. The number of frames that is transformed jointly in one implementation of the TWT is given by $2^{J_T}$ (this value is also called Group of Frames - GOF). The type of filters used in the wavelet transform can also be arbitrarily chosen with a restriction that the filtering is approximated using integer filter coefficients.

The spatial integer wavelet transform (SWT) according to the invention can be implemented as an iterative multi-scale decomposition of each temporal wavelet transform subband. The SWT can consist of a separable horizontal and vertical step, and/or a filtering of the SWT can be approximated using integer filter coefficients.

Thus, a 2D separable wavelet transform is implemented in the spatial dimensions as an iterative multi-scale decomposition of each TWT subband. This wavelet transform is denoted as spatial wavelet transform (SWT). One iteration of the SWT consists of separable horizontal and vertical steps, and it generates 4 subbands per iteration, namely one low-pass (LL) subband and three high-pass (LH, HL and HH) subbands. Thus, if the number of iterations is $J_S$, the total number of subbands is $3J_S+1$. The low-pass subband is indexed as $j_S=0$, whereas the high-pass subbands obtained in the $k_1$th iteration are indexed as $j_S=3(J_S-k_1)+k_2$, where $k_2 \in \{1,2,3\}$ corresponds to the subband {LH,HL,HH}, respectively. The resulting subbands are denoted as $W_{jT,jS}$, where $j_T=0,...,J_T$ and $j_S=0,...,3J_S$.

It is to be preferred that the subtracted signal frames undergo a color space conversion before the temporal and spatial integer wavelet transforms are applied, particularly a color space conversion to a luminance chrominance color space.

Depending on the color space of the input video signal, each pixel consists of a collection of values that determine the local color components. The input color space is assumed to be known. For example, the input color space is converted to the YCbCr color space wherein Y denotes the luminance, Cb the color blue and Cr the color red. This color space is also known as YUV color space. Y again denotes the luminance and U and V the two subcomponents of the chrominance. The resulting conversion can be into any of the possible YUV formats. The luminance component Y is always sampled at the same sampling rate as the input pixels, whereas the color components U and V are sampled at either lower or at the same sampling rate depending on the chosen YUV format. Thus, the index vector corresponding to the Y component also has 4 coordinates and it is denoted as $(c,t,x,y)_Y$. The corresponding index vectors for the U and V components can be denoted as $(c,t,x_U,y_U)_U$ and $(c,t,x_V,y_V)_V$ and can have subsampled spatial coordinates $(x_U,$

$y_U$) and ($x_V,y_V$). These 3 components of the color space are processed separately in the subsequent steps. However, if the input color space is already the desirable YCbCr, then the conversion step is omitted.

Apart from that, the subtracted signal frames can undergo a contouring before the temporal and spatial integer wavelet transforms are applied, particularly a contouring wherein they are analyzed to curve out zero areas obtained in the pre-processing process of background subtraction. Advantageously, the contouring succeeds the color space conversion step.

The background subtraction pre-processing step provides large areas of the Y, U and V components filled with zeros for each FVTV frame, because all pixels that belong to the background areas are zeroed out by the subtraction process. For that reason, it is preferable when only the foreground areas, which contain non-zero pixels, are transformed and encoded in the subsequent steps to save the encoding bit rate and computational time. The process of segmenting (curving) the non-zero areas is called contouring.

The contouring can be implemented either by computing the minimal rectangular box containing all non-zero pixels or by computing the precise curve of the outer border of the non-zero area. Usually, these modalities are alternatives and only one of them is chosen. However, cases can be imagined when both contouring steps can be applied in combination, for example in order to choose the best result for further processing.

The process of contouring is reasonably applied to all FVTV frames. It can be implemented in at least the two modalities mentioned. According to the first modality the minimal rectangular box that contains all non-zero pixels is computed. This results in 4 coordinates that determine the upper-left corner and size of the box. According to the second modality the precise curve of the outer border of the non-zero area is computed. This results in a collection of coordinates for each border pixel from the curve.

Advantageously, the spatial integer wavelet transform is applied only to contoured foreground areas and/or is implemented using a shape-adaptive modification.

If contouring is used, then the SWT is preferably applied only to the contoured foreground areas. Moreover, in case the contouring extracts the precise curve around the foreground areas according to the second modality of contouring mentioned above, the SWT can be implemented using a shape-adaptive modification. A discussion of this can be found in Maitre and Do, "Joint encoding of the depth image based representation using shape-adaptive wavelets", IEEE International Conference on Image Processing 2008, pp. 1768-1771. The number of iterations (scales) $J_S$ is arbitrarily chosen and it is limited by the spatial resolution of the FVTV frames or TWT subbands. The implementation of the transform is based on the lifting scheme as described in Daubechies and Sweldens, "Factoring wavelet transforms into lifting steps", Journal of Fourier Analysis and Applications, Vol. 4, No. 3, pp. 247-269, May 1998, wherein any wavelet filter types can be used with a restriction that the filtering is approximated using integer filter coefficients.

The wavelet transformed signal frames can undergo a bit plane truncation and quantization in order to quantize the transform coefficients, and/or they can undergo an entropy coding.

Most of the obtained wavelet transform coefficients have small magnitudes, but they can have different signs. To make the algebraic signs more consistent (and to alleviate the encoding of the sign bit), the invention proposes that the coefficients are first converted using the following formula

$$w_c = \begin{cases} 2w & w \geq 0 \\ -2w-1 & w < 0 \end{cases}, \qquad (1)$$

where $w_c$ is a converted version of the wavelet coefficient $w$ (including the coefficients obtained from all the three color components Y, U and V according to the color space conversion). The bits in the binary representation of the coefficients $w_c$ are grouped in bit planes. A bit plane consists of all the bits that belong to the same bit level of the binary representation of all the converted coefficients $W_c$ from the same subband $W_{j_T,j_S}$.

Since the subbands are obtained as outputs of the iterative wavelet transforms in time and space, the number of bit levels in each subband is precisely determined by the order of transforms. For example, it can be assumed that one low-pass or high-pass filtering step within an inventive TWT increases the number of bit levels in the binary representation of the transform coefficients by $B_{TL}$ or $B_{TH}$, respectively, whereas one low-pass or high-pass filtering step within the SWT increases this number by $B_{SL}$ and $B_{SH}$, respectively. Then, the number of bit levels in the subband $W_{j_T,j_S}$ is given by $B_{j_T,j_S} = B_{pxl} + B_{T,j_T} + B_{S,j_S}$, where $B_{pxl}$ is the number of bit levels in the original pixels of the Y, U and V components. In a common case, but not necessarily, the number of bit levels in the original pixels of the Y, U and V

components is $B_{pxl}$ = 8. Moreover,

$$B_{T,j_T} = \begin{cases} J_T, & j_T = 0 \\ (J_T - j_T)B_{TL} + B_{TH}, & j_T = 1,\ldots,J_T \end{cases} \quad (2)$$

and

$$B_{S,j_S} = \begin{cases} 2J_S B_{SL}, & j_S = 0 \\ [2(J_S - \lceil j_S/3 \rceil)+1]B_{SL} + B_{SH}, & 1 \le j_S - 3k_1 \le 2, k_1 = 0,\ldots,J_S - 1 \\ 2(J_S - \lceil j_S/3 \rceil)B_{SL} + 2B_{SH}, & j_S = 3k_1 + 3, k_1 = 0,\ldots,J_S - 1 \end{cases} \quad (3)$$

Thus, the total number of the bit planes is given by

$$B_{total} = \sum_{j_T = 0,\ldots,J_T} \sum_{j_S = 0,\ldots,3J_S} B_{j_T,j_S}, \quad (4)$$

whereas the minimal and maximal numbers of the bit planes are $B_{JT,3JS} = B_{pxl} + B_{TH} + 2B_{SH}$ and $B_{0,0} = B_{pxl} + J_T + 2J_S B_{SL}$, respectively.

The truncation can be controlled by a quality factor and/or be implemented so that retained bit planes carry the highest significance. The quantized coefficients can undergo an entropy coding. The bit levels in each subband are indexed in a descending order of significance, that is, the bit level indexed by $b$ = 0 corresponds to the most significant bit, whereas the bit indexed by $b = B_{jT,jS}$ -1 corresponds to the least significant bit. Hence, following the aforementioned notation, the bit planes are uniquely denoted as $BP_{b,jT,JS}$. They are hierarchically ordered to allow for a bit rate control and a trade-off between the bit rate and distortion. The order is defined so that the bit plane $BP_{b_1,j_{T,1},j_{S,1}}$ is ranked higher than the bit plane $BP_{b_2,j_{T,2},j_{S,2}}$ if (i) $b_1 < b_2$ or (ii) $b_1 = b_2$, $j_{T,1} < j_{T,2}$ or (iii) $b_1 = b_2$, $j_{T,1} = j_{T,2}$, $j_{S,1} < j_{S,2}$.

All of the bit planes can be truncated in the process of quantization with only two exceptions. The first exception (a) are the two most significant bit planes in the high-pass subbands denoted as $BP_{b,j_T,j_S}$, for $b$ = 0,1 and $j_T + j_S > 0$, and the second exception (b) is the significant upper half of the bit planes in the low-pass subband denoted as $BP_{b,0,0}$, for $0 \le b < B_{0,0}/2$. The bit planes which can be truncated are grouped in the ordered set $\Theta_{trunc}$ using the ordering explained above in the preceding paragraph, whereas the ones that have to be retained are grouped in the set $\Theta_{fix}$ (here, the order is unimportant). The number of bit planes in $\Theta_{trunc}$ is given by

$$B_{trunc} = |\Theta_{trunc}| = B_{total} - B_{0,0}/2 - 2((J_T + 1)(3J_S + 1) - 1). \quad (5)$$

A quality factor $0 \le Q \le 100$ can be introduced to control the number of the retained bit planes, so that, apart from the bit planes in $\Theta_{fix}$, the first $\dfrac{Q}{100} \cdot B_{trunc}$ bit planes in $\Theta_{trunc}$ are retained for quantization. The case $Q$ = 0 corresponds to retaining only $\Theta_{fix}$ (coarsest encoding), whereas the case $Q$ =100 corresponds to retaining all the bit planes (lossless encoding).

In the process of truncation, the least significant bits are discarded and the retained bits are updated so that the quantization mean square error is minimized. These retained quantization values are scanned next in the encoding step.

The bits in the retained bit planes are encoded using an entropy coder, wherein the order of the bits is following the order of the bit planes as explained in the foregoing. The bits that belong to the color component Y are encoded separately, whereas the bits from the components U and V are encoded jointly. The entropy coder can be based on a zero run-length technique as described in Goh, Soraghan and Durrani, "Wavelet transform based adaptive bit-plane run-length coding for still images", IEEE Electronics Letters, vol. 30, no. 5, pp. 395-396, 1994, or it can be based on the adaptive arithmetic coding technique as explained in Witten, Neal and Cleary, "Arithmetic coding for data compression", ACM Communications, vol. 30, no. 6, pp. 520-540, June 1987.

According to the invention, the compression efficiency can be traded off for the compression quality and/or computational complexity depending on the available processing power and/or the data size and/or using a single quality factor.

The compression efficiency (the bit rate, respectively) can be traded off for the compression quality (the distortion) and for the computational complexity by changing the number of iteration levels in the TWT and SWT. Of course, the choice also depends on possible reconstruction delay constraints. Moreover, both the bit rate and distortion can be scaled by a quality factor $Q$, where $Q$ sweeping from 0 to 100 corresponds to encoding at low to high quality, that is, at high to low compression ratio. So the invention permits a scaling of the required coding bit rate and the reconstruction quality using a single quality factor.

The overall computational complexity is reduced using several properties of the method aiming at providing real-time encoding and decoding. (a) The lack of inter-viewpoint prediction removes the computations which have been implemented in the prior art involving the pixels from different cameras. (b) The implementation of the TWT and SWT is based on integer coefficients, which reduces the processing requirements as compared to the floating point operations. (c) The chosen wavelet filters are short as compared to the common implementation in still image coding. (d) The inverse transforms preferably also use the integer coefficients and short filters. (e) The truncation of bit planes leads to a reduced number of operations because of the smaller number of bits used in the representation of the transform coefficients.

An or, preferably, the output signal generated by the method for encoding texture data can be a bit stream consisting of an overall header, particularly containing the binary code of the number of cameras and/or the temporal resolution and/or the spatial resolution and/or the type of filters and number of iterations for the temporal and/or spatial integer wavelet transform, and of a header and/or data for each group of frames transformed jointly in one implementation of the temporal wavelet transform, particularly a header for each group of frames containing contouring data and/or motion compensation data and/or entropy coder header data.

The output signal generated by the encoding method preferably is a bit stream that consists of the overall header and also of a header and data for each group of frames or GOF. The overall header in general contains the binary code of the following numbers and/or parameters: (i) Number of cameras, (ii) temporal resolution (frames-per-second), (iii) spatial resolution (pixels-per-frame in the horizontal and vertical dimensions), (iv) the type of filters and number of iterations for the TWT, (v) the type of filters and number of iterations for the SWT.

The header of each GOF for each camera in the framework of the present invention may consist of: (i) Contouring data (the extracted box coordinates or encoded contour), which can be encoded using a differential coding for the data extracted for the current GOF, (ii) motion compensation data (if used) and (iii) entropy coder header data (if any). Usually, the header is followed by the data encoded by the entropy encoder for the particular camera.

The method provides random access to any group of frames transformed jointly in one implementation of the temporal wavelet transform at all viewpoints and/or it provides a real-time implementation.

As has been pointed out in the foregoing, for the sparse camera setup used in the context of the invention, no inter-viewpoint prediction scheme is used. This allows for any GOF at all viewpoints to be randomly accessed without any limitation. The access to specified frames is only limited by the size of the GOF, because the entire GOF has to be reconstructed, of course.

The coding method described above is computationally simple so that it allows for a real-time implementation. The only reconstruction delay is determined by the size of the GOF, because, as said, the entire GOF has to be decoded and reconstructed. A video signal at a particular viewpoint can thus be reconstructed with a maximal delay equal to (GOF-1) frames.

Apart from that, it is an object of the invention to provide a method for decoding texture data of free viewpoint television signals encoded as described in the foregoing. The method for decoding is characterized by the steps of encoding being applied in an inverse order and the inverse spatial integer wavelet transform and the inverse temporal integer wavelet transform using approximated quantized values of the transform coefficients.

Thus, the method for decoding texture data can comprise the steps of entropy decoding and/or inversion of the bit plane truncation and quantization and/or performing an inverse spatial integer wavelet transform and an inverse temporal integer wavelet transform and/or inversion of the contouring and/or inversion of the color space conversion. The steps of decoding are preferably performed in this listed order. The input signal in the method for decoding is the output signal previously generated by the encoding method, namely a bit stream consisting of the overall header and a header and encoded data for each GOF. First, the process of entropy coding is reversed, then the bit plane truncation and quantization. An inverse SWT is performed and precedes an inverse TWT. Then the process of contouring is inverted, and, if there has been a color space conversion during the encoding process, the color space conversion is reversed, too.

The decoding method of the invention applies the inverse order of the operations as compared to the encoding and provides a set of reconstructed textures that correspond to the camera viewpoints. These textures can be used further together with the reconstructed silhouette sequence to synthesize the view at a chosen viewpoint. The inverse SWT and TWT preferably use the approximated quantized values of the transform coefficients.

A further object of the invention is a texture encoder, adapted to encode texture data of free viewpoint television signals, particularly by a method as described in the foregoing, and adapted to use as input free viewpoint television signals acquired by a sparse set of synchronized cameras capturing a scene from different spatial locations with the signals of each camera for specific points of time being pre-processed by implementing a background subtraction, thereby obtaining a set of subtracted signal frames. The encoder is characterized by being adapted to encode the subtracted signal frames of each single camera for specific points of time independently from the subtracted signal frames of the other cameras, particularly for these specific points of time, by the use of temporal and spatial integer wavelet transform means. The transform means and/or the further components or parts of the texture encoder can be and/or can be implemented on computing means, preferably including corresponding storage means.

The texture encoder of the invention is applied after the pre-processing step of background subtraction in a free viewpoint television coding system. As described, the encoder is designed for a sparse camera setup and, for that reason, the correlation among the signals obtained from different cameras is low. Thus, the encoder does not deploy any prediction encoding scheme across the viewpoints. Instead, the signals from different cameras are encoded independently. This simplifies the computation.

Preferably, the texture encoder further comprises a color space converter and/or contouring means and/or bit plane truncation and quantization means and/or an entropy coder.

Overall, the proposed FVTV texture encoder may consist of a color space converter, contouring means, temporal and spatial integer wavelet transform means, bit plane truncation and quantization means and an entropy coder. The components can be used in this order to perform the processing of the input signals. The input signal of such an inventive texture encoder is a set of background subtracted video signals from the cameras, whereas the output signal consists of the header data followed by the entropy coded bit streams.

Therefore, in a preferred encoder according to the invention, the input frames in each texture encoder are first converted to the YCbCr (YUV) color space by the color space converter and then, due to large zero areas obtained in the background subtraction pre-processing, each frame is analyzed in the contouring step by the contouring means to curve out these zero areas for reducing the output bit rate and the computational complexity. The contoured frames are transformed by the transform means using the temporal and spatial integer wavelet transforms. The obtained transform coefficients are first converted to eliminate the changes of the sign, and a portion of the bit planes are truncated to quantize the coefficients by the bit plane truncation and quantization means. The truncation is controlled by a quality factor and it is implemented so that the retained bit planes carry the highest significance (reduce most the distortion of the reconstructed views). The quantized coefficients are entropy encoded by the entropy coder and the bits are streamed for each camera together with the header information.

A last object of the invention is a texture decoder adapted to decode encoded texture data or parts of free viewpoint television signals encoded by a texture encoder as explained above and/or encoded by a method as described in the foregoing. The texture decoder of the invention is adapted to apply the steps of encoding in an inverse order, and the texture decoder also comprises inverse spatial integer wavelet transform and inverse temporal integer wavelet transform means adapted to use approximated quantized values of the transform coefficients.

The texture decoder is deploying an inverse process and provides the reconstructed video signals at the camera viewpoints, which are used further for view synthesis at chosen viewpoints on request. The overall computational complexity is kept low so that the entire process can be implemented in a real-time mode. As the decoder applies the inverse order of the operations as compared to the encoder, it provides a set of reconstructed textures that correspond to the camera viewpoints. In order to synthesize the view at the chosen viewpoint as described, these textures are used further together with the reconstructed silhouette. In addition to the inverse SWT and TWT means, the texture decoder can comprise an entropy decoder and/or means for inverting the bit plane truncation and quantization and/or means for inverting the contouring and/or means for inverting the color space conversion, too.

## Detailed description of the drawings

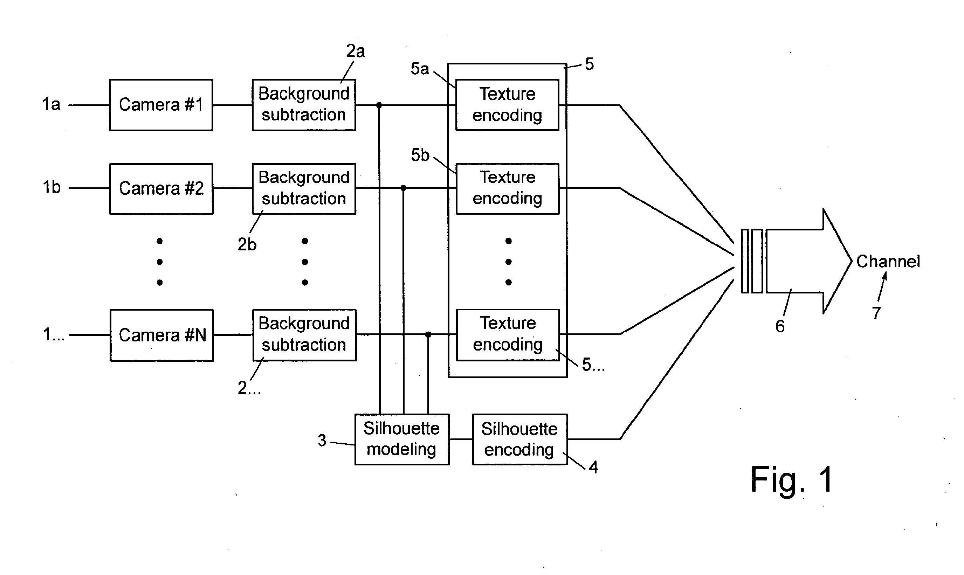

Fig. 1 shows a block-scheme of a signal pre-processing including background subtraction, silhouette modelling and encoding and required by the method for encoding texture data according to the invention. Fig. 1 depicts a sparse setup of cameras 1a, 1b, 1c,... Altogether, there is a number of N cameras acquiring free viewpoint television signals. The signals of each camera are pre-processed in order to generate suitable input signals for the inventive method of encoding textures. The first step of the pre-processing is a background subtraction 2a, 2b, 2c, ... applied to the signals of each camera. The background subtraction blocks 2a, 2b, 2c, .... (altogether N blocks, because there are N cameras) are followed by a silhouette modelling block 3, which again precedes a silhouette encoding block 4. It is only after this pre-processing and especially the background subtraction 2a, 2b, 2c.... is done that the signals are provided to the texture encoder 5 with its texture encoding blocks 5a, 5b, 5c,... (the total number of texture encoding blocks 5a, 5b, 5c, ... is again N). The subtracted signal frames encoded by the texture encoder 5 and the silhouette encoding results are then, according to the arrow 6, provided to a channel 7.

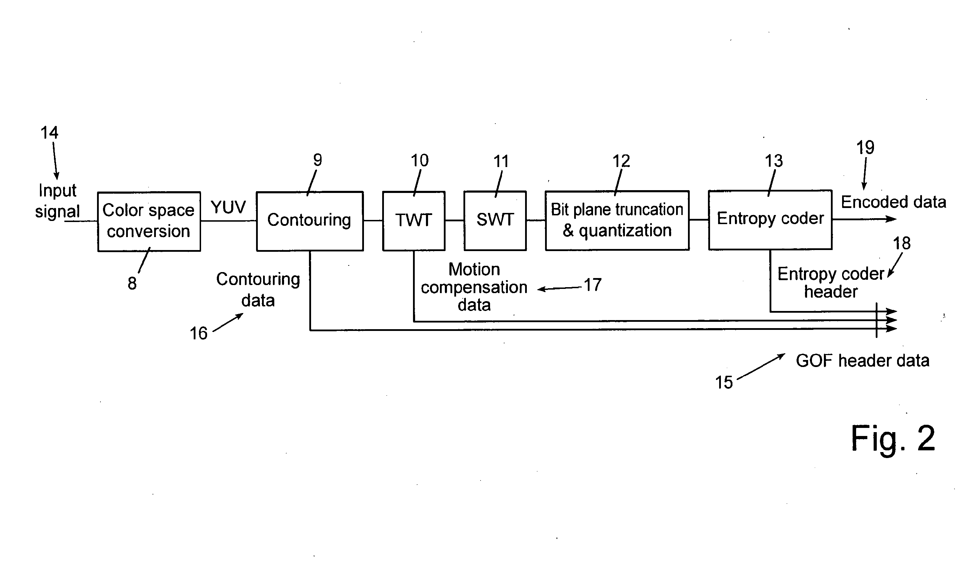

Fig. 2 depicts a sequence of operation diagram for an inventive method for encoding texture data. The operations shown here are accomplished by the texture encoder 5 of fig. 1. The texture encoder 5 and its texture encoding blocks 5a, 5b, 5c,... consist of a color space conversion block 8, a contouring data extraction block 9, a temporal wavelet transform (TWT) block 10 and a spatial wavelet transform (SWT) block 11 (corresponding to the respective transform means). The spatial wavelet transform block 11 is followed by a bit plane truncation and quantization block 12, which again precedes an entropy coder 13. The input signal is a background subtracted signal frame 14 from each camera, whereas the output signal consists of the header data 15 for each GOF (composed of contouring data 16, motion compensation data 17 and an entropy coder header 18) and the output of the entropy coder 13 in form of the encoded data 19.

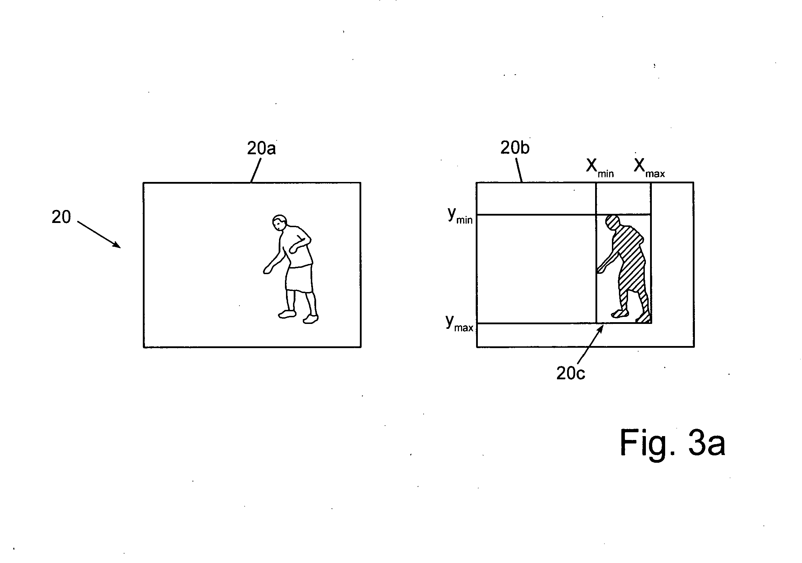

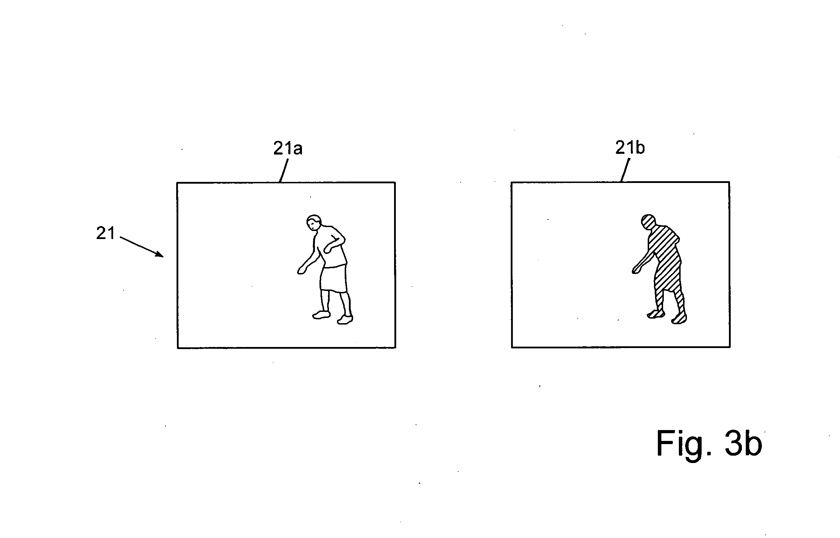

Figs. 3a and 3b show possible contouring steps in the framework of the present invention performed by the contouring data extraction block 9 and using a minimal rectangular box method 20 and a precise contour method 21, respectively. Contours are extracted in each frame after large areas have been zeroed out in the background subtraction 2a, 2b, ... pre-processing step. The two preferred modalities of contouring are the minimal rectangular box method 20 and the exact or precise contour method 21, which are usually used as alternatives. The information received in this way can be differentially encoded for the frames within a GOF. The boxes 20a and 21a in figs. 3a and 3b, respectively, show signal frames before the contouring is applied, the boxes 20b and 21b show signals after the contouring is applied. The coordinates $(x_{min}, y_{min})$, $(x_{max}, y_{min})$, $(x_{min}, y_{max})$ and $(x_{max}, y_{max})$ confine the minimal rectangular box 20c defined in applying the minimal rectangular box method 20.

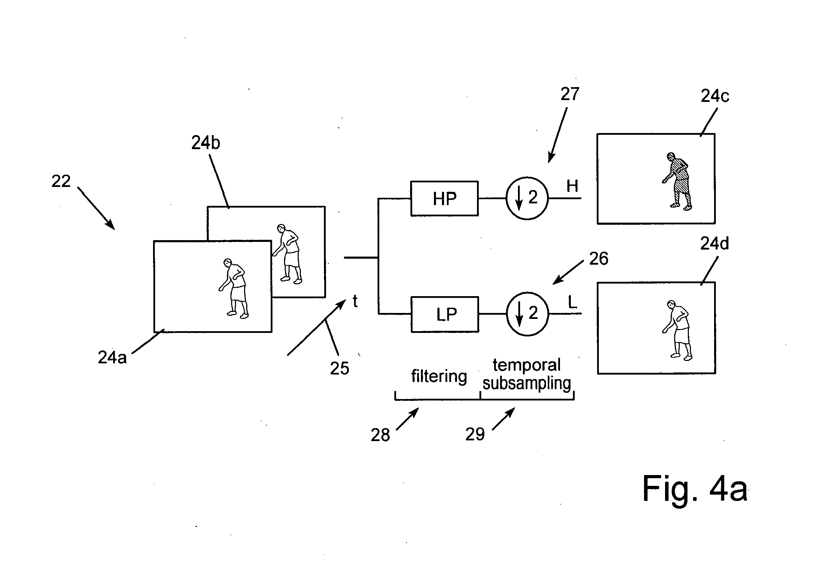

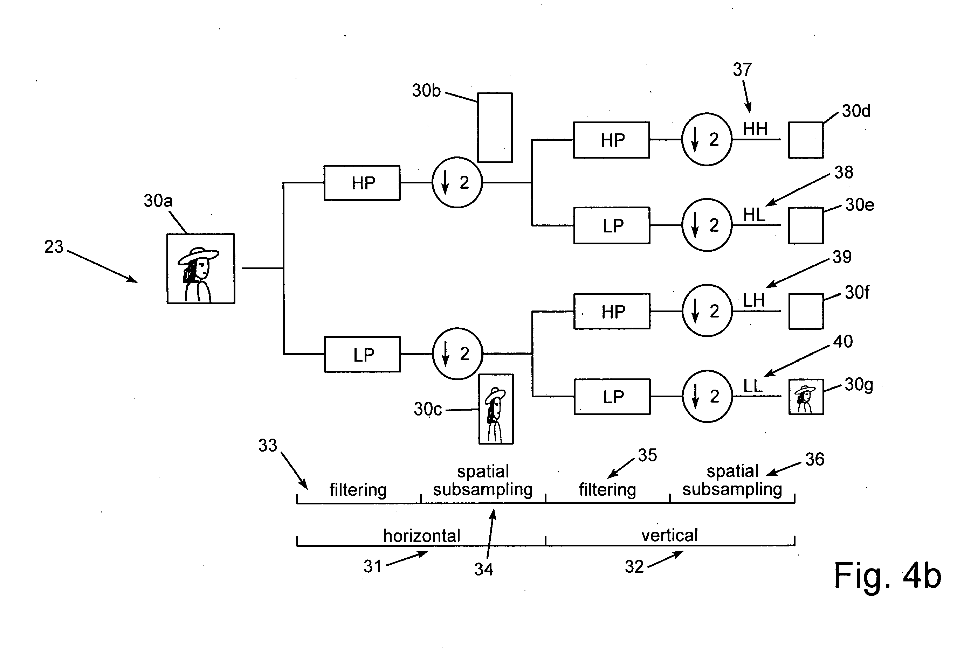

Fig. 4a shows an overview of a temporal 1D wavelet transform 22 and fig. 4b an overview over a spatial 2D wavelet transform 23 according to the invention as performed in the temporal wavelet transform block 10 and the spatial wavelet transform block 11 of Fig. 2, respectively. The temporal wavelet transform 22 is an iterative one-dimensional wavelet decomposition across frames 24a, 24b and so on in the time dimension, here represented by the time arrow 25. One step of the temporal wavelet transform generates two subbands, namely one low-pass subband (L) 26 and one high-pass subband (H) 27. The temporal wavelet transform includes a low-pass and a high-pass filtering 28 and a temporal subsampling 29. The iteration of the temporal wavelet transform 22 is applied on the low-pass subband. The number of generated subbands is $J_T + 1$, where $J_T$ is the number of iterations. The resulting frames are denoted by the reference numerals 24c and 24d, respectively.

As can be seen in Fig. 4b, the spatial wavelet transform (SWT) 23 is an iterative two-dimensional wavelet decomposition of each temporal wavelet transform subband within a frame 30a in the two spatial dimensions, where the iteration is applied on the low-pass subband. The spatial wavelet transform 23 is separable with the one-dimensional building blocks applied along the horizontal and vertical directions independently. In Fig. 4b the horizontal part of the spatial wavelet transform is denoted by the reference numeral 31, the vertical part by the reference numeral 32. The horizontal part 31 comprises a first filtering 33 (low-pass and high-pass) and a first spatial subsampling 34. The frames resulting from the processing steps of this horizontal part 31 are denoted as frame 30b (high-pass) and frame 30c (low-pass). The vertical part 32 of the spatial wavelet transform 23 comprises a second filtering 35 and a second spatial subsampling 36. As shown, one iteration of the SWT generates 4 subbands, 1 low-pass subband (LL) 40 and 3 high-pass subbands (LH, HL and HH) 39, 38 and 37. Altogether, the number of generated subbands is $3J_S + 1$, where $J_S$ is the number of iterations.

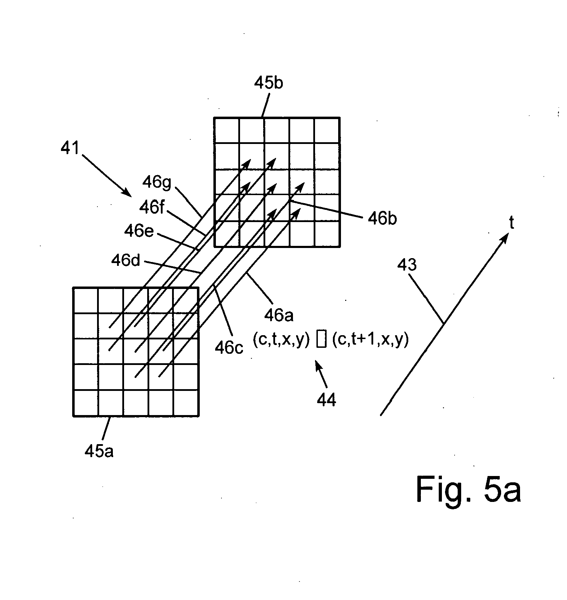

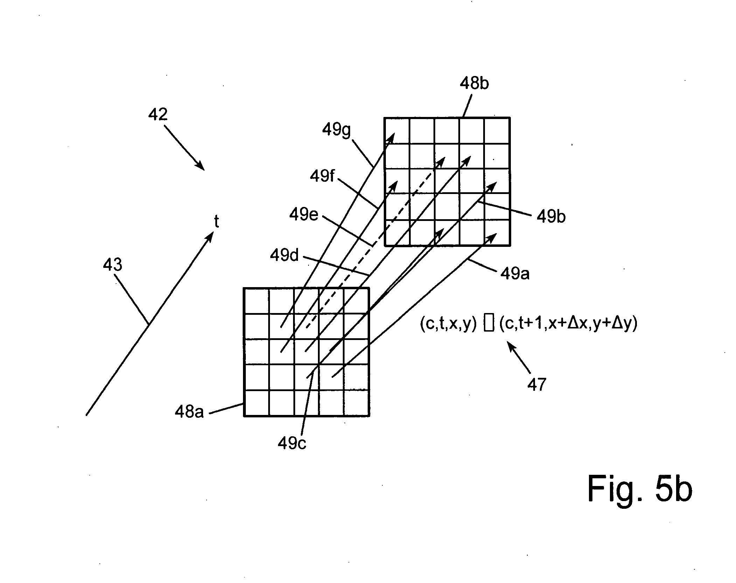

Figs. 5a and 5b illustrate coordinates for different points of time in an inventive temporal wavelet transform without and with motion compensation. As pointed out before, the TWT can be applied without or with motion compensation. Fig. 5a shows a sketch 41 for a TWT without motion compensation, fig. 5b a sketch 42 for a TWT with motion compensation. The reference numeral 43 refers to the time arrow. In the case of the TWT without motion compensation according to sketch 41 the implementation is simpler (no motion compensation optimization process needed), but the performance of the compression method is lower. In the case of the TWT with motion compensation according to sketch 42, the coordinates of the TWT are adapted so that the energy is maximally compressed in the low-pass subbands. This improvement of the performance is paid by an increase of the computational complexity.

The TWT without motion compensation in fig. 5a is applied across the pixel coordinates 44. The spatial coordinates $x$, $y$ remain fixed between a first point of time or time $t$ and a second time $t + 1$. The frame at the point of time *t* in a grid form is denoted by 45a, the frame at point of time *t* + 1 by 45b. As the spatial coordinates remain the same, the arrows 46a to 46g between coordinates of frame 45a and the corresponding coordinates of frame 45b are parallel.

In the case of the TWT with motion compensation of fig. 5b the TWT is applied across the pixel coordinates 47. Here, the frame at a point of time *t* in a grid form is denoted by 48a, the frame at time *t* + 1 by 48b. Now, the arrows 49a - 49g between the corresponding coordinates of frames 48a and 48b are not parallel due to the change in the spatial coordinates from time *t* to time *t* + 1.

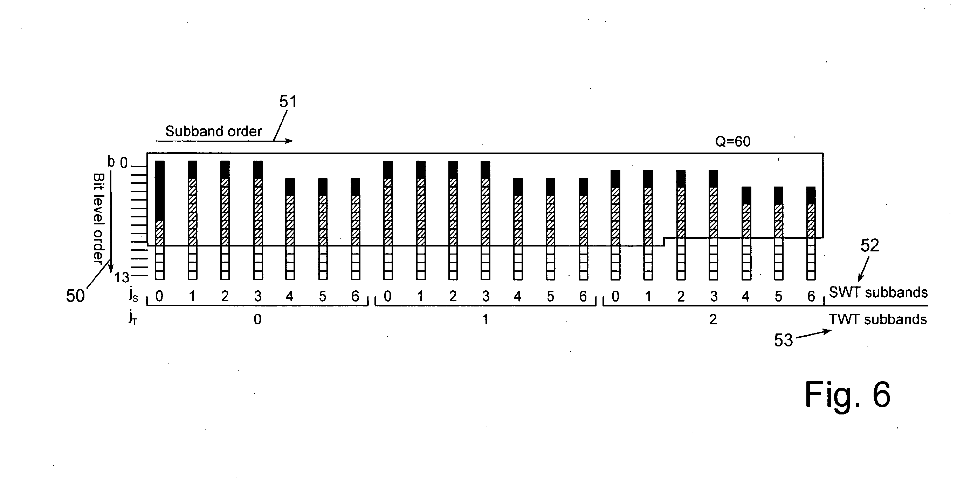

Fig. 6 visualizes an example for the order and truncation of bit planes according to the invention. Bit planes are ordered and truncated according to the quality factor $0 \leq Q \leq 100$ . The arrow 50 shows the direction of increasing bit level order, the arrow 51 the direction of increasing subband order. Shown are TWT subbands 53 of orders 0 to 2 and corresponding SWT subbands 52 of orders 0 to 6. The top half bit planes in the low-pass subband and the first two bit planes in each high-pass subband have to be encoded, whereas the others are retained according to the descending order of significance. The case $Q = 0$ corresponds to the coarsest quantization (highest compression ratio), whereas $Q$ =100 corresponds to the lossless compression. The example in fig. 6 refers to $J_T = J_S = 2$, $B_{pxl} = 8$, $B_{TL} = B_{TH} = 1$, $B_{SL}$ = $B_{SH}$ = 1 (Haar wavelet filter-bank in both TWT and SWT) and $Q = 60$.

**List of reference numerals**

| | |
|---|---|
| **1a, 1b, ...** | cameras |
| **2a, 2b, ...** | background subtraction |
| **3** | silhouette modeling block |
| **4** | silhouette encoding block |
| **5** | texture encoder |
| **5a, 5b,...** | texture encoding blocks |
| **6** | arrow |
| **7** | channel |
| **8** | color space conversion block |
| **9** | contouring data extraction block |
| **10** | temporal wavelet transform (TWT) block |
| **11** | spatial wavelet transform (SWT) block |
| **12** | bit plane truncation and quantization block |
| **13** | entropy coder |
| **14** | background subtracted signal frame |
| **15** | header data for each GOF |
| **16** | contouring data |
| **17** | motion compensation data |
| **18** | entropy coder header |
| **19** | encoded data |

| 20 | minimal rectangular box method |
|---|---|
| 20a, 20b | boxes |
| 20c | minimal rectangular box |
| 21 | precise contour method |
| 21a, 21b | boxes |
| 22 | temporal 1D wavelet transform |
| 23 | spatial 2D wavelet transform |
| 24a - 24d | frames |
| 25 | time arrow |
| 26 | low-pass subband TWT |
| 27 | high-pass subband TWT |
| 28 | filtering TWT |
| 29 | temporal subsampling TWT |
| 30a - 30g | frames |
| 31 | horizontal part SWT |
| 32 | vertical part SWT |
| 33 | first filtering SWT |
| 34 | first spatial subsampling SWT |
| 35 | second filtering SWT |
| 36 | second spatial subsampling SWT |
| 37 | subband HH SWT |
| 38 | subband HL SWT |
| 39 | subband LH SWT |
| 40 | subband LL SWT |
| 41 | sketch TWT without motion compensation |
| 42 | sketch TWT with motion compensation |
| 43 | time arrow |
| 44 | pixel coordinates |
| 45a, 45b | frames |

| | |
|---|---|
| **46a - 46g** | arrows |
| **47** | pixel coordinates |
| **48a, 48b** | frames |
| **49a - 49g** | arrows |
| **50** | arrow |
| **51** | arrow |
| **52** | SWT subbands |
| **53** | TWT subbands |

**Claims**

1. Method for encoding texture data of free viewpoint television signals wherein the free viewpoint television signals are acquired using a sparse set of synchronized cameras (1a, 1b, ...) capturing a scene from different spatial locations and wherein the signals of each camera (1a, 1b, ...) for specific points of time are pre-processed by implementing a background subtraction (2a, 2b, ...), thereby obtaining a set of subtracted signal frames (14, 24a, 24b) of the texture data, **characterized by** the subtracted signal frames (14, 24a, 24b) of each single camera (1a, 1b, ...) for specific points of time being encoded independently from the subtracted signal frames (14, 24a, 24b) of the other cameras (1a, 1b, ...), particularly for these specific points of time, by the use of a temporal and a spatial integer wavelet transform (22, 23).

2. Method according to claim 1, wherein one step of the temporal integer wavelet transform (22) generating a low-pass and a high-pass subband (26, 27) and/or being implemented for spatial coordinates having offset or not having offset in the temporal dimension.

3. Method according to claim 2, wherein the temporal integer wavelet transform (22) being implemented as an iterative multi-scale decomposition with the iteration being applied to the low-pass subband (26) and/or a filtering (28) of the temporal integer wavelet transform (22) being approximated using integer filter coefficients.

4. Method according to any of claims 2 or 3, wherein the spatial integer wavelet transform (23) being implemented as an iterative multi-scale decomposition of each temporal wavelet transform subband (26, 27) and consisting of a separable horizontal and vertical step (31, 32) and/or a filtering (33, 35) of the spatial integer wavelet transform being approximated using integer filter coefficients.

5. Method according to any of claims 1 to 4, wherein the subtracted signal frames (14, 24a, 24b) undergoing a color space conversion (8) before the temporal and spatial integer wavelet transforms (22, 23) are applied, particularly a color space conversion (8) to a luminance chrominance color space.

6. Method according to any of claims 1 to 5, wherein the subtracted signal frames (14, 24a, 24b) undergoing a contouring (9) before the temporal and spatial integer wavelet transforms (22, 23) are applied, particularly a contouring (9) where they are analyzed to curve out zero areas obtained in the pre-processing process of background subtraction.

7. Method according to claim 6, wherein the contouring (9) being implemented by computing the minimal rectangular box (20c) containing all non-zero pixels and/or by computing the precise curve (21) of the outer border of the non-zero area.

8. Method according to any of claims 6 or 7, wherein the spatial integer wavelet transform (23) being applied only to contoured foreground areas and/or being implemented using a shape-adaptive modification.

9. Method according to any of claims 1 to 8, wherein the wavelet transformed signal frames (30d - 30g) undergoing a bit plane truncation and quantization (12) in order to quantize the transform coefficients and/or the wavelet transformed signal frames (30d - 30g) undergoing an entropy coding (13).

10. Method according to claim 9, wherein the truncation (12) being controlled by a quality factor and/or the truncation (12) being implemented so that retained bit planes carry the highest significance and/or the quantized coefficients undergoing an entropy coding (9).

11. Method according to any of claims 1 to 10, wherein the compression efficiency being traded off for the compression quality and/or computational complexity depending on the available processing power and/or the data size and/or using a single quality factor.

12. Method according to any of claims 1 to 11, wherein the method for encoding texture data generating an output signal that is a bit stream consisting of an overall header, particularly containing the binary code of the number of cameras and/or the temporal resolution and/or the spatial resolution and/or the type of filters and number of iterations for the temporal and/or spatial integer wavelet transform, and of a header (15) and/or data (19) for each group of frames transformed jointly in one implementation of the temporal wavelet transform (22), particularly a header (15) for each group of frames containing contouring data (16) and/or motion compensation data (17) and/or entropy coder header data (18).

13. Method according to any of claims 1 to 12, wherein the method providing random access to any group of frames transformed jointly in one implementation of the temporal wavelet transform (22) at all viewpoints and/or providing a real-time implementation.

14. Method for decoding texture data of free viewpoint television signals encoded according to any of claims 1 to 13, wherein the steps of encoding being applied in an inverse order and by the inverse spatial integer wavelet transform and the inverse temporal integer wavelet transform using approximated quantized values of the transform coefficients.

15. Texture encoder (5), adapted to encode texture data of free viewpoint television signals, particularly by a method for encoding according to any of the claims 1 to 13, and adapted to use as input free viewpoint television signals acquired by a sparse set of synchronized cameras (1a, 1b, ...) capturing a scene from different spatial locations with the signals of each camera (1a, 1b, ...) for specific points of time being pre-processed by implementing a background subtraction, thereby obtaining a set of subtracted signal frames (14, 24a, 24b), **characterized by** the texture encoder (5) being adapted to encode the subtracted signal frames (14) of each single camera (1a, 1b, ...) for specific points of time independently from the subtracted signal frames (14, 24a, 24b) of the other cameras (1a, 1b, ...), particularly for these specific points of time, by the use of temporal and spatial integer wavelet transform means.

16. Texture encoder (5) according to claim 15, wherein the texture encoder (5) further comprising a color space converter (8) and/or contouring means (9) and/or bit plane truncation and quantization means (12) and/or an entropy coder (13).

17. Texture decoder, adapted to, particularly by a method according to claim 14, decode encoded texture data of free viewpoint television signals encoded by a texture encoder (5) according to any one of claims 15 or 16 or by a method according to any one of claims 1 to 13, wherein the texture decoder being adapted to apply the steps of encoding in an inverse order and the texture decoder comprising inverse spatial integer transform and inverse temporal wavelet integer transform means adapted to use approximated quantized values of the transform coefficients.

Fig. 1

Fig. 2

Input signal 14

Color space conversion 8

YUV

Contouring 9

Contouring data 16

TWT 10

SWT 11

Motion compensation data 17

Bit plane truncation & quantization 12

Entropy coder 13

Entropy coder header 18

GOF header data 15

Encoded data 19

Fig. 3a

EP 2 375 746 A1

21a

21b

21

Fig. 3b

Fig. 4a

Fig. 4b

$(c,t,x,y) \square (c,t+1,x,y)$

Fig. 5a

Fig. 5b

$(c,t,x,y) \rightarrow (c,t+1,x+\Delta x,y+\Delta y)$

49b

48b

49a

47

49g

49f

49e

49d

49c

42

t

43

48a

Fig. 6

EP 2 375 746 A1

Europäisches
Patentamt

European
Patent Office

Office européen
des brevets

# EUROPEAN SEARCH REPORT

Application Number

EP 10 15 8617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AKIRA KUBOTA ET AL: "Multiview Imaging and 3DTV" IEEE SIGNAL PROCESSING MAGAZINE, IEEE SERVICE CENTER, PISCATAWAY, NJ, US, vol. 24, no. 6, 1 November 2007 (2007-11-01), pages 10-21, XP011197672 ISSN: 1053-5888 * page 3 - page 9; figures 1,2,4,5,9 * | 1-17 | INV. H04N7/26 H04N13/00 |
| Y | MARCUS MAGNOR, PRASHANT RAMANATHAN, BERND GIROD: "Multi-view coding for image-based rendering using 3-d scene geometry" IEEE TRANSACTIONS ON CIRCUITS AND SYSTEMS FOR VIDEO TECHNOLOGY, IEEE SERVICE CENTER, PISCATAWAY, NJ, US LNKD-DOI:10.1109/TCSVT.2003.817630, vol. 13, no. 11, 1 November 2003 (2003-11-01), pages 1092-1106, XP011102944 ISSN: 1051-8215 * paragraph [000V] * | 1-17 | |
| Y,D | JAE-WON CHO ET AL: "A 3-D Mesh Sequence Coding Using the Combination of Spatial and Temporal Wavelet Analysis" 28 March 2007 (2007-03-28), COMPUTER VISION/COMPUTER GRAPHICS COLLABORATION TECHNIQUES; [LECTURE NOTES IN COMPUTER SCIENCE;;LNCS], SPRINGER BERLIN HEIDELBERG, BERLIN, HEIDELBERG, PAGE(S) 389 - 399 , XP019078203 ISBN: 978-3-540-71456-9 * paragraph [0002] * | 1-17 | TECHNICAL FIELDS SEARCHED (IPC) H04N |

-/--

The present search report has been drawn up for all claims

| Place of search | Date of completion of the search | Examiner |
|---|---|---|
| Munich | 11 August 2010 | Kuhn, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EUROPEAN SEARCH REPORT

Application Number

EP 10 15 8617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MULLER K ET AL: "Rate-distortion-optimized predictive compression of dynamic 3D mesh sequences" SIGNAL PROCESSING. IMAGE COMMUNICATION, ELSEVIER SCIENCE PUBLISHERS, AMSTERDAM, NL LNKD- DOI:10.1016/J.IMAGE.2006.07.002, vol. 21, no. 9, 1 October 2006 (2006-10-01), pages 812-828, XP025080497 ISSN: 0923-5965 [retrieved on 2006-10-01] * paragraph [0002] * | 1-17 | |
| A | MENEGAZ G ET AL: "Object-based coding of volumetric medical data" IMAGE PROCESSING, 1999. ICIP 99. PROCEEDINGS. 1999 INTERNATIONAL CONFERENCE ON - KOBE, JAPAN 24-28 OCT. 1999, IEEE, PISCATAWAY, NJ, USA LNKD-DOI:10.1109/ICIP.1999.817289, vol. 3, 24 October 1999 (1999-10-24), pages 920-924, XP010368820 ISBN: 978-0-7803-5467-8 * paragraph [0003] - paragraph [0005] * | 1-17 | |
| A | INOUE E ET AL: "Compression of 3D shape data using SA-WT" IMAGE PROCESSING, 1999. ICIP 99. PROCEEDINGS. 1999 INTERNATIONAL CONFERENCE ON - KOBE, JAPAN 24-28 OCT. 1999, IEEE, PISCATAWAY, NJ, USA LNKD-DOI:10.1109/ICIP.1999.817131, vol. 3, 24 October 1999 (1999-10-24), pages 339-343, XP010368757 ISBN: 978-0-7803-5467-8 * paragraph [0002] * | 1-17 | TECHNICAL FIELDS SEARCHED (IPC) |

The present search report has been drawn up for all claims

| Place of search | Date of completion of the search | Examiner |
|---|---|---|
| Munich | 11 August 2010 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007052644 A
- WO 2009108028 A
- WO 2009131287 A
- CN 000101557519 A
- US 20090033740 A

- US 20100026788 A
- JP 2007141228 A
- CN 000101491079 A
- CN 000101558652 A

### Non-patent literature cited in the description

- **TANIMOTO ; FUJII.** FTV: Achievements and challenges. *ISO/IEC JTC1/SC29/WG11 M11259,* October 2004
- **TANIMOTO ; WILDEBOER.** Frameworks for FTV coding'', Picture Coding Symposium. *PCS-2009,* May 2009
- **MERKLE ; SMOLIC ; MUELLER ; WIEGAND.** Efficient prediction structures for multiview video coding. *IEEE Transactions on Circuits and Systems for Video Technology,* November 2007, vol. 17 (11), 1461-1473
- The plenoptic function and the elements of early vision. **ADELSON ; BERGEN.** Computational Models of Visual Processing. MIT Press, 1991, 3-20
- **MUELLER ; SMOLIC ; KAUTZNER ; EISERT ; WIEGAND.** Rate-distortion optimized predictive compression of dynamic 3-D mesh sequences. *Signal Processing: Image Communication,* 2007, vol. 21 (9), 812-828

- A 3-D mesh sequence coding using the combination of spatial and temporal wavelet analysis. **CHO ; KIM ; VALETTE ; JUNG ; PROST.** Lecture Notes in Computer Science. Springer, 2007, vol. 4418, 389-399
- **MAITRE ; DO.** Joint encoding of the depth image based representation using shape-adaptive wavelets. *IEEE International Conference on Image Processing,* 2008, 1768-1771
- **DAUBECHIES ; SWELDENS.** Factoring wavelet transforms into lifting steps. *Journal of Fourier Analysis and Applications,* May 1998, vol. 4 (3), 247-269
- **GOH ; SORAGHAN ; DURRANI.** Wavelet transform based adaptive bit-plane run-length coding for still images. *IEEE Electronics Letters,* 1994, vol. 30 (5), 395-396
- **WITTEN ; NEAL ; CLEARY.** Arithmetic coding for data compression. *ACM Communications,* June 1987, vol. 30 (6), 520-540